# EUROPÄISCHE PATENTSCHRIFT

(11) **EP 3 050 425 B1**
(45) Veröffentlichungstag und Bekanntmachung des Hinweises auf die Patenterteilung: **08.05.2019**
(21) Anmeldenummer: 16153433.4
(22) Anmeldetag: 29.01.2016
(51) Int. Cl.: A01D 69/08, A01F 29/14

(54) **ANTRIEBSVERBINDUNG FÜR EINE HÄCKSELTROMMEL UND ERNTEMASCHINE**
DRIVE CONNECTION FOR A CHOPPING CYLINDER AND HARVESTING MACHINE
LIAISON D'ENTRAINEMENT POUR UN TAMBOUR DE HACHAGE ET MOISSONNEUSE

(30) Priorität: 02.02.2015 DE 102015201749
(43) Veröffentlichungstag der Anmeldung: 03.08.2016
(73) Patentinhaber: Deere & Company, Moline, IL 61265 (US)
(72) Erfinder: Vergara, Daniel, 28850 Torrejon de Ardoz (ES)
(74) Vertreter: Reichert, Christian

(56) Entgegenhaltungen:
- US-A- 5 038 904
- US-A- 5 622 034
- US-A- 5 890 353

## Beschreibung

Die Erfindung betrifft eine Antriebsverbindung für eine Häckseltrommel sowie eine Erntemaschine mit einer Häckseleinrichtung mit einer solchen Antriebsverbindung.

Es ist bekannt, Erntemaschinen mit einer Häckseleinrichtung auszustatten, in der das Erntegut, vorzugsweise stängeliges Erntegut wie Mais oder Zuckerrohr, während des Ernteprozesses nach dem Schneiden oder Abtrennen vom Boden in einem weiteren Arbeitsschritt zerhäckselt bzw. zerkleinert wird. Derartige Häckseleinrichtungen werden beispielsweise in Feldhäckslern oder auch in Zuckerrohrerntemaschinen eingesetzt. Die Häckseleinrichtungen können als ein- oder zwei-Häckseltrommel-Einrichtungen ausgebildet sein, wobei Erstere eine sich drehende und mit Messern bestückte Trommel umfasst, die gegen ein feststehendes Messer dreht, wobei die Schneiden der Messer axial zu einer Rotationsachse der Trommel ausgerichtet sind und das zu häckselnde Erntegut zwischen die Häckseltrommel und das feststehende Messer geführt und dabei zerkleinert wird. Zweitere dagegen umfasst zwei gegeneinander drehende mit Messern bestückte Häckseltrommeln, wobei das zu häckselnde Erntegut zwischen die beiden Häckseltrommeln geführt und dabei zerkleinert wird. Auch hier sind die Schneiden der Messer jeweils axial zu den Rotationsachsen der Trommeln ausgerichtet. Je nach gewünschtem Häckselgrad kann die Drehzahl und auch die Anzahl der auf einer Häckseltrommel angeordneten Messer variieren. Insbesondere bei einer zwei-Häckseltrommel-Einrichtung muss eine Feinjustierung der Trommeln zueinander erfolgen, um ein präzises, abstandsgenaues Gegeneinanderlaufen der Messer zu gewährleisten. Dies ist jedoch oft erst nach der Montage der Erntemaschine und insbesondere nach Einbau der Häckseleinrichtung möglich. Bei letzterer ist eine der Häckseltrommeln meist nach ihrem Einbau bzw. nach der Montage nicht justierbar im Antriebsstrang angeordnet, wobei die zweite Häckseltrommel vom Antriebsstrang lösbar und ihre Position bzw. Umdrehungsstellung gegenüber der anderen Häckseltrommel entsprechend einstellbar ausgebildet ist. In der Regel erfolgt dies über eine lösbare Flansch-, Schraub- oder Bolzenverbindung zwischen einem Antriebsrad im Antriebsstrang der Häcksel-Einrichtung und der einzustellenden Häckseltrommel. Die vorzunehmende Einstellung bzw. das sogenannte "Timing" erfolgt dabei bei einem geöffneten Getriebe bzw. geöffnetem Gehäuse des Antriebsstrangs der Häckseleinrichtung, was einen gewissen Montageaufwand und Zeitverlust mit sich bringt. Es ist ferner bekannt, ein Öffnen des Getriebes bzw. des Gehäuse des Antriebsstrangs zu vermeiden, indem eine Kupplungsanordnung an einer der Häckseltrommeln vorgesehen ist, um einen Kraftschluss bzw. ein Lösen der Kupplungseinrichtung von außerhalb des Getriebes bzw. des Gehäuses des Antriebsstrangs zu ermöglichen. Nachteilig hier ist, dass bekannte Lösungen den erforderlichen Kraftschluss für die Kupplungsanordnung durch mehrere Verbindungsbolzen bzw. Schrauben vorsehen, die in einem gewissen Radius zur Rotationsachse der Häckseltrommel angeordnet sind und dadurch unter hohen Wechselbiegespannungen stehen. Zudem sind die Schrauben mit Schraubenköpfen versehen, deren Absätze zum Schraubenschaft zusätzlich Angriffspunkte für Wechselspannungen durch Biegemomente bieten. Dies kann oftmals zum Bruch der Schraube führen und damit den Ausfall der Häckseleinrichtung mit sich bringen.

Ein Bestreben liegt daher darin, eine Antriebsverbindung zu schaffen, die ein einfaches und praktikables Einstellen oder Justieren bzw. "Timing" der Häckseleinrichtung ermöglicht und mit der die oben genannten Probleme überwunden werden.

Eine derartige Antriebsverbindung wird durch die Lehre der Patentansprüche 1 und 11 vorgeschlagen. Weitere vorteilhafte Ausgestaltungen und Weiterbildungen gehen aus den Unteransprüchen hervor.

Es wird eine Antriebsverbindung für eine Häckseltrommel vorgeschlagen, mit einem Antriebsrad, einer Antriebswelle und einer Kupplungsanordnung, wobei die Kupplungsanordnung ein Kupplungsscheibenpaket mit antriebsradseitigen Kupplungsscheiben und antriebswellenseitigen Kupplungsscheiben umfasst, das von einer auf einem Wellenendbereich der Antriebswelle angeordneten und auf das Kupplungsscheibenpaket wirkenden Druckplatte und einem konzentrisch zur Antriebswelle angeordneten Verbindungsbolzen mit einer Axialkraft beaufschlagbar und in Reibschluss bringbar ist, wobei der Verbindungsbolzen ein erstes Außengewinde aufweist, welches mit einer in der Druckplatte ausgebildeten ersten Gewindebohrung, und ein zweites Außengewinde aufweist, welches mit einer im Wellenende ausgebildeten zweiten Gewindebohrung in Eingriff bringbar ist, wobei das erste und zweite Außengewinde sowie die erste und zweite Gewindebohrung zueinander entgegengesetzt ausgebildete Gewinderichtungen aufweisen. Durch die oben genannte Ausbildung der Kupplungsanordnung zwischen Antriebswelle und Antriebsrad wird ermöglicht, die Kupplungsanordnung von außerhalb des Gehäuses des Antriebsstrangs bzw. der Häckseleinrichtung zu lösen bzw. axial zu spannen, um das vorgesehene Kupplungsscheibenpaket zu lockern bzw. in Reibschluss zu bringen. Durch die entgegen gesetzten Gewinde an nur einem Verbindungsbolzen werden bei einer Drehbewegung des Verbindungsbolzens die Druckplatte und Antriebswelle voneinander weg oder zueinander hin bewegt (je nach Drehrichtung) und damit das Kupplungsscheibenpaket gelöst bzw. in Reibschluss gebracht, wobei der Verbindungsbolzen wartungsfreundlich von außen (außerhalb eines den Getriebestrang einschließenden Gehäuses) zugänglich ist. Damit ist mit minimalem Wartungsaufwand und minimaler Teilevielfalt eine äußerst einfache und praktikable Lösung zum Herstellen des Kraftschlusses zwischen Antriebsrad und Antriebswelle der Häckseltrommel geschaffen. Durch die Verwendung des hier vorgeschlagenen konzentrisch zur Antriebswelle angeordneten Verbindungsbolzens erfolgt mangels Hebelarm zwischen Antriebswelle und Verbindungsbolzen der Kraftschluss zudem ohne nennenswerte Biegespannungen, die auf den Verbindungsbolzen wirken. Dadurch wird ein Bruch des Verbindungsbolzens präventiv vermieden.

Der Verbindungsbolzen weist im Bereich des ersten Außengewindes einen maximalen Durchmesser auf, so dass das erste Außengewinde als bis zu einem offenen stirnseitigen Ende des Verbindungsbolzens verlaufendes Gewinde ausgebildet sein kann und insbesondere am offenen stirnseitigen Ende des Verbindungsbolzens kein Flansch, Kranz oder ein andersgearteter radial nach außen gerichteter Absatz ausgebildet ist. Dadurch werden auf den Verbindungsbolzen wirkende Biegemomente vermieden, die bei Ausbildung eines Flansches, Kranzes oder eines andersgearteten radial nach außen gerichteten Absatzes, aufgrund einer dadurch entstehenden Kontaktfläche bzw. Anlagefläche zur Druckplatte, am Verbindungsbolzen eingeleitet würden, was wiederum zum Bruch des Verbindungsbolzen führen könnte.

Die Druckplatte ist derart ausgebildet, dass das Wellenende abgedeckt wird. Ferner ist eine der Kupplungsanordnung zugewandte Kreisringfläche an der Druckplatte ausgebildet. Die Druckplatte wird vorzugsweise mit ihrer Kreisringfläche mit der Kupplungsanordnung in Kontakt gebracht und auf diese gespannt, wodurch eine Axialspannung auf das Kupplungsscheibenpaket ausgeführt wird und dieses in Reibschluss bringbar ist. In umgekehrter Weise kann die Druckplatte mit ihrer Kreisringfläche von der Kupplungsanordnung wegbewegt und der Reibschluss entsprechend gelöst werden.

Die Kupplungsanordnung umfasst ein auf dem Wellenendbereich zwischen Druckplatte und Kupplungspaket axial verschiebbar gelagerten Kupplungsring, der eine zum Wellenende ausgerichtete Kreisringfläche aufweist, die mit der der Kupplungsanordnung zugewandten Kreisringfläche der Druckplatte in Eingriff bringbar ist. Dies hat den Vorteil, dass die Druckplatte nicht direkt mit dem Kupplungsscheibenpaket in Kontakt tritt, sondern verschleißschonend auf den Kupplungsring drückt und diesen zur Reibschlussbildung axial auf das Kupplungsscheibenpaket drückt bzw. spannt.

Das erste Außengewinde und die erste Gewindebohrung weisen eine zum zweiten Außengewinde bzw. zur zweiten Gewindebohrung verschiedene Gewindesteigung und einen zum zweiten Außengewinde bzw. zur zweiten Gewindebohrung verschiedenen Gewindedurchmesser auf. Die unterschiedliche Gewindesteigung erlaubt das Maß zu beeinflussen mit dem die Druckplatte und die Antriebswelle aufeinander zubewegt werden bzw. von einander wegbewegt werden können. Die verschiedenen Gewindedurchmesser ermöglichen einen funktionalen und wartungsfreundlichen Zusammenbau.

Vorzugsweise ist das erste Außengewinde und die erste Gewindebohrung mit einer gegenüber dem zweiten Außengewinde bzw. der zweiten Gewindebohrung größeren Gewindesteigung versehen. Ferner weist das erste Außengewinde und die erste Gewindebohrung einen zum zweiten Außengewinde bzw. zur zweiten Gewindebohrung größeren Gewindedurchmesser auf. Das hier in dem Ausführungsbeispiel gezeigte Verhältnis von Gewindegang und Gewindedurchmesser ist auf das später beschriebene Ausführungsbeispiel abgestimmt und hat sich in diesem Zusammenhang als mögliche Anordnung herausgestellt. Andere, davon abweichende Anordnungen sind daher ebenfalls möglich.

Auf dem Wellenabsatz der Antriebswelle ist eine Abstandshülse gelagert, an dem sich das Kupplungsscheibenpaket und das Antriebsrad axial abstützen, wobei das Kupplungsscheibenpaket zwischen der Abstandshülse und der Druckplatte angeordnet ist. Die Abstandshülse stellt somit ein Mittel zur Erzeugung einer beim Aufbringen der Axialkraft seitens des Verbindungsbolzens notwendigen Gegenkraft dar und bietet gleichzeitig auch einen Absatz an dem das Antriebsrad axial zur Anlage kommt und damit axial spielbehaftet festgelegt wird.

Ferner ist ein Gewindestift angeordnet, der mit einer in der Druckplatte ausgebildeten Durchgangsbohrung und mit einer in dem Wellenende ausgebildeten Gewindebohrung in Eingriff bringbar ist, um eine Verdrehsicherung der Druckplatte gegenüber der Antriebswelle bereitzustellen. Der Gewindestift wird dabei durch die Durchgangsbohrung geführt und in die Gewindebohrung geschraubt. Damit wird eine Verdrehsicherung der Druckplatte gegenüber der Antriebswelle geschaffen und dadurch vermieden, dass sich der mit der Druckplatte und der Antriebswelle in Eingriff befindliche Verbindungsbolzen durch Verdrehen der Druckplatte gegenüber der Antriebswelle mit verdreht.

Ferner ist eine Verbindungsplatte und ein Sicherungsstift vorgesehen, beispielsweise ein Federstecker, wobei die Verbindungsplatte den Werkzeugansatz des Verbindungsbolzens mit dem Gewindebolzen verbindet, so dass ein Verdrehen des Verbindungsbolzens gegenüber dem Gewindestift blockiert ist und wobei sich der Sicherungsstift quer zum Gewindestift durch diesen erstreckt und die Verbindungsplatte axial gegenüber dem Gewindestift sichert. Der Sicherungsstift erstreckt sich vorzugsweise durch eine Querbohrung im Gewindestift und fixiert die Verbindungsplatte gegen axiales Verschieben. Damit wird gewährleistet, dass sich die Verbindungsplatte axial nicht vom Gewindestift bzw. vom Verbindungsbolzen lösen kann, so dass die geschaffene Verdrehsicherung dauerhaft auch unter Betriebsbedingungen bestehen bleibt.

Eine Antriebsverbindung für eine Häckseleinrichtung gemäß obiger Ausführungen eignet sich besonders zum Einsatz in einer Erntemaschine, beispielsweise einem Feldhäcksler oder einem Zuckerrohrernter, wobei letzterer üblicherweise mit einer Häckseleinrichtung mit zwei Häckseltrommeln ausgerüstet ist und eine der Trommeln zum Einstellen der Häckselrate und des Häckselmaßes gegenüber der anderen Trommel vom Antriebsstrang gelöst und justiert werden kann. Feldhäcksler sind üblicherweise mit einer Häckseleinrichtung mit nur einer rotierenden Häckseltrommel versehen, die jedoch ebenfalls eine Antriebsverbindung gemäß obiger Ausführung aufweisen kann. Auch andere Erntemaschinen, bei denen eine Häckseleinrichtung vorgesehen ist können mit einer solchen Antriebsverbindung ausgestattet sein und sind hiermit berücksichtigt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer Erntemaschine in Form eines Zuckerrohrernters mit einer Häckseleinrichtung,
- Fig. 2: eine schematische Querschnittsansicht einer Antriebsverbindung für die Häckseleinrichtung aus Figur 1,
- Fig. 3: eine vergrößerte Ansicht eines Teils der schematischen Querschnittansicht aus Figur 2 und
- Fig. 4: eine perspektivische Explosionsdarstellung der Antriebsverbindung aus Figur 2 und 3.

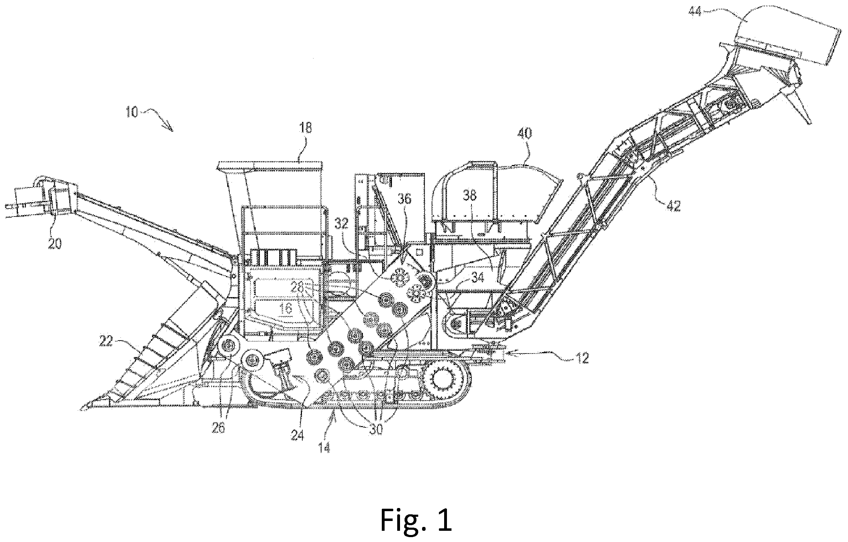

Figur 1 zeigt eine Erntemaschine 10 in Form eines Zuckerrohrernters zum Ernten von in Reihen angebautem Zuckerrohr. Die Erntemaschine 10 umfasst einen Rahmen 12 mit rechten (nicht gezeigt) und linken Kettentrieben 14. Ein Verbrennungsmotor 16 sorgt für den Antrieb der Kettentriebe und versorgt andere an der Erntemaschine 10 angeordnete und angetriebene Aggregate mit Antriebsenergie. Eine Fahrzeugkabine 18 ist am vorderen Teil des Rahmens 12 angeordnet. Ferner umfasst die Erntemaschine 10 eine obere Schneideinrichtung 20, mit der das Zuckerrohr oberends beim Erntevorgang gestutzt wird, um einen Blätteranteil am Erntegut vorweg zu reduzieren.

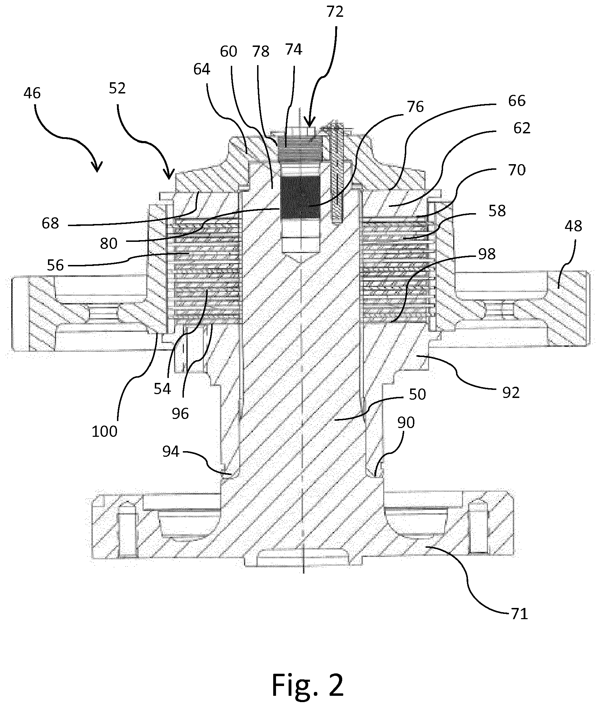

Um ein reihengesteuertes Ernten zu gewährleisten sind Pflanzenabstandshalter 22 vorgesehen. Unterhalb des Motors 16 und zwischen den Kettentrieben 14 ist ferner eine Bodenschneideinheit 24 vorgesehen, die zum Trennen des Zuckerrohrs oberhalb des Bodens dient. Oberhalb der Bodenschneideinheit 24 sind Niederhalterrollen 26 angeordnet, die das stängelige Zuckerrohr vor dem Abtrennen durch die Bodenschneideinheit 24 in Richtung nach vorn herunter drücken. Der Bodenschneideinheit 24 schließen sich mehrere nach hinten und in Aufwärtsrichtung aneinander gereihte Zuführrollenpaare 28, 30 an, die das abgeschnittene Zuckerrohr in eine mit Häckseltrommeln 32, 34 ausgebildete Häckseleinrichtung 36 fördern, wobei die Häckseleinrichtung 36 eine obere und eine untere Häckseltrommel 32, 34 umfasst. Die Häckseleinrichtung 36 zerkleinert das stängelige Zuckerrohr, welches dann in eine Reinigungskammer 38 mit Abscheidereinrichtung 40 geführt wird. Dort wird das Häckselgut von mitgeernteten Blättern und anderen Verunreinigungen durch ein in der Abscheidereinrichtung 40 vorgesehenes Gebläse (nicht gezeigt) gesäubert. Von dort fällt das Häckselgut auf ein Förderband 42 und wird in einen zweiten Abscheider 44 zu einer weiteren Reinigung geleitet, bevor es vom rückseitigen Ende des Förderbands 44 in einen der Erntemaschine 10 folgenden Ladewagen (nicht gezeigt) abgeladen wird. Die in der Häckseleinrichtung 36 angeordneten Häckseltrommeln 32 und 34, sind über eine gemeinsame Antriebseinrichtung (nicht gezeigt) angetrieben. Die Häckseltrommeln 32, 34 selbst sind hier nicht weiter im Detail dargestellt und auf herkömmliche Weise mit aus dem Stand der Technik bekannten Häckselmessern bestückt, deren Schneidkanten axial zu den Rotationsachsen der Häckseltrommeln 32, 34 ausgerichtet sind. Eine der Häckseltrommeln 32, 34 ist mit einer Antriebsverbindung 46 gemäß der Darstellung in den Figuren 2 bis 4 ausgerüstet.

Die Antriebsverbindung 46 umfasst ein Antriebsrad 48, eine Antriebswelle 50 und eine Kupplungsanordnung 52, wobei die Kupplungsanordnung 52 ein Kupplungsscheibenpaket 54 mit antriebsrad- und antriebswellenseitigen Kupplungsscheiben 56, 58, sowie einen auf einem Wellenendbereich 60 der Antriebswelle 50 axial verschiebbar gelagerten Kupplungsring 62 enthält. Der Kupplungsring 62 ist zwischen einer Druckplatte 64 und dem Kupplungsscheibenpaket 54 axial verschiebbar auf der Antriebswelle 50 gelagert und weist eine zum Wellenendbereich 60 hin ausgerichtete Kreisringfläche 66 auf, die mit einer der Kupplungsanordnung 52 zugewandten Kreisringfläche 68 der Druckplatte 64 in Eingriff bringbar ist. Ferner weist der Kupplungsring 62 eine zum Kupplungsscheibenpaket 54 ausgerichtete Kreisringfläche 70 auf, mit der der Kupplungsring 62 axial verschiebbar mit dem Kupplungsscheibenpaket 54 in Eingriff bringbar ist. Der Antriebswelle 50 schließt sich ein Befestigungsflansch 71 zum Anschluss an die Häckseltrommel 32, 34 an. Ein konzentrisch zur Antriebswelle angeordneter Verbindungsbolzen 72 verbindet die Druckplatte 64 mit der Antriebswelle 50. Der Verbindungsbolzen 72 weist ein erstes Außengewinde 74 und ein zweites Außengewinde 76 auf. Das erste Außengewinde 74 steht mit einer in der Druckplatte 64 ausgebildeten ersten Gewindebohrung 78 und das zweite Außengewinde 76 mit einer im Wellenendbereich 60 ausgebildeten zweiten Gewindebohrung 80 in Eingriff, wobei das erste und zweite Außengewinde 74, 76 sowie die erste und zweite Gewindebohrung 78, 80 zueinander entgegengesetzt ausgebildete Gewinderichtungen aufweisen. Über den Verbindungsbolzen 72 wird zwischen der Antriebswelle 50 und der Druckplatte 64 eine Axialkraft eingeleitet die wiederum von der Druckplatte 64 auf den Kupplungsring 62 übertragen wird und damit auf das Kupplungsscheibenpaket 54 wirkt und dieses in Reibschluss bringt.

Durch die oben beschriebene Ausbildung der Kupplungsanordnung 52 zwischen Antriebswelle 50 und Antriebsrad 48 wird ermöglicht, die Kupplungsanordnung 52 von außerhalb eines Gehäuses der Antriebsverbindung 46 bzw. der Häckseleinrichtung 36 zu lösen bzw. axial zu spannen um das vorgesehene Kupplungsscheibenpaket 54 zu lockern bzw. in Reibschluss zu bringen. Durch die entgegen gesetzten Außengewinde 74, 76 an nur einem Verbindungsbolzen 72 werden bei einer Drehbewegung des Verbindungsbolzens 72 die Druckplatte 64 und die Antriebswelle 50 voneinander weg oder zueinander hin bewegt und damit, je nach Drehrichtung, das Kupplungsscheibenpaket 54 gelöst bzw. in Reibschluss gebracht. Damit ist mit minimalem Wartungsaufwand und minimaler Teilevielfalt eine äußerst einfache und praktikable Lösung zum Herstellen des Kraftschlusses zwischen Antriebsrad 48 und Antriebswelle 50 der Häckseltrommel 32, 34 geschaffen.

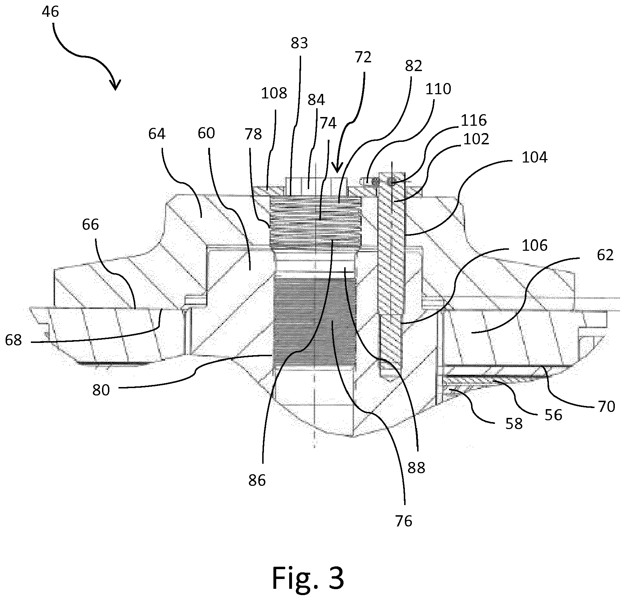

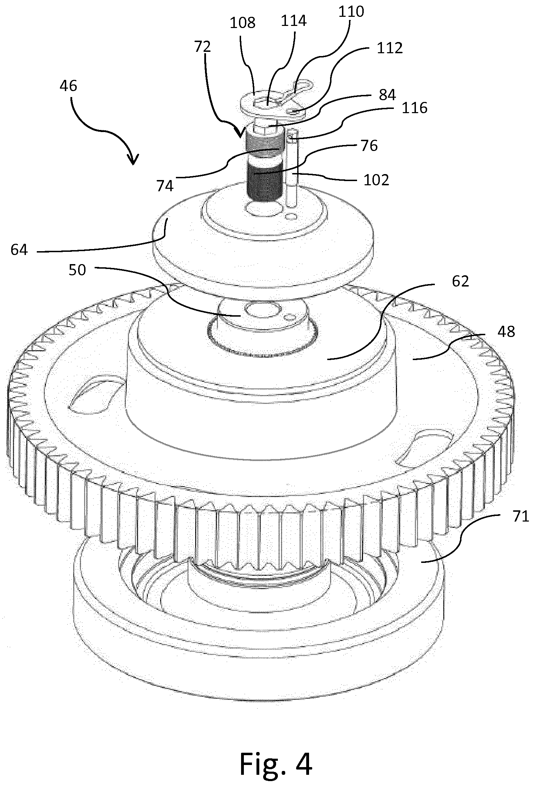

Der Verbindungsbolzen 72 weist im Bereich des ersten Außengewindes 74 einen maximalen Durchmesser auf, so dass das erste Außengewinde 74 als ein Gewinde ausgebildet ist, welches ausgehend von einem am Wellenendbereich 60 außen gelegenen Ende 82 des Verbindungsbolzens 72 mit einer offenen Stirnseite 83 in Richtung der Mitte des Verbindungsbolzens 72 verläuft (siehe Figuren 3 und 4). An dem außen gelegenen, offenen stirnseitigen Ende 82 ist ein Werkzeugansatz 84 ausgebildet, über den der Verbindungsbolzen 72 mit einem entsprechenden Werkzeug verdrehbar ist. Der Werkzeugansatz 84 ist hier in Form eines Außensechskants ausgebildet. Andere Ausbildungen, wie beispielsweise ein Innensechskant oder dergleichen, sind ebenfalls denkbar. Wie oben erwähnt, steht das erste Außengewinde 74 mit einer entsprechenden in der Druckplatte 64 ausgebildeten ersten Gewindebohrung 78 in Eingriff. Dem ersten Außengewinde 74 schließt sich ausgehend von einem innerhalb der ersten Gewindebohrung 78 gelegenen Ende 86 des ersten Außengewindes 74 ein Wellenabsatz 88 an. Dem Wellenabsatz 88 schließt sich das zweite Außengewinde 76 an, welches sich in das Innere des Wellenendbereichs 60 bzw. in die zweite Gewindebohrung 80 erstreckt. Der Verbindungsbolzen 72 weist im Bereich des zweiten Außengewindes 78 einen geringeren Durchmesser auf als im Bereich des ersten Außengewindes 74. Entsprechend sind die ersten und zweiten Gewindebohrungen 78, 80 mit unterschiedlichen Durchmessern versehen.

Neben den bereits erwähnten verschiedenen Durchmessern an den Außengewinden 74, 76 weisen das erste Außengewinde 74 und die erste Gewindebohrung 78 eine zum zweiten Außengewinde 76 bzw. zur zweiten Gewindebohrung 80 verschiedene Gewindesteigung auf, wobei das zweite Außengewinde 76 bzw. die zweite Gewindebohrung 80 hier eine kleinere Gewindesteigung besitzen. Über die (unterschiedlichen) Gewindesteigungen kann das Maß beeinflusst werden, mit dem die Druckplatte 64 und die Antriebswelle 50 in bei Einleiten einer Drehbewegung des Verbindungsbolzens 72 voneinander weg bzw. aufeinander zu bewegt werden. Ferner ermöglichen die verschiedenen Gewindedurchmesser einen funktionalen und wartungsfreundlichen Zusammenbau der Kupplungsanordnung 52. Die in den Figuren 2 bis 4 gezeigten Verhältnisse von Gewindesteigungen und Gewindedurchmesser sind auf die Anwendung abgestimmt und haben sich in diesem Zusammenhang als mögliche Anordnung herausgestellt. Andere, davon abweichende Verhältnisse sind daher ebenfalls möglich.

In dem Bereich der Kupplungsanordnung 52 ist an der Antriebswelle 50 ein Wellenabsatz 90 ausgebildet (Figur 2), wobei auf dem Wellenendbereich 60 der Antriebswelle 50 eine Abstandshülse 92 gelagert ist, die am einem ersten Ende 94 am Wellenabsatz 90 axial zur Anlage kommt. Ein dem ersten Ende 94 gegenüber liegendes Ende 96 der Abstandshülse 92 dient als Anlage für ein dem Kupplungsring 62 gegenüberliegendes Ende 98 des Kupplungsscheibenpakets 54 sowie für eine an dem Antriebsrad 48 ausgebildete Kreisringfläche 100, so dass sich das Kupplungsscheibenpaket 54 sowie das Antriebsrad 48 axial an der Abstandshülse 92 abstützen, wobei das Kupplungsscheibenpaket 54 zwischen der Abstandshülse 92 und der Druckplatte 64 angeordnet ist. Die Abstandshülse 92 stellt somit ein Mittel zur Erzeugung einer beim Aufbringen der Axialkraft seitens des Verbindungsbolzens 72 notwendigen Stützkraft bzw. Gegenkraft dar und bietet gleichzeitig auch einen Absatz an dem das Antriebsrad axial zur Anlage kommt und damit axial spielbehaftet auf der Antriebswelle 50 festgelegt wird.

Um eine Verdrehsicherung für die Druckplatte 64 und für den Verbindungsbolzen 72 gegenüber der Antriebswelle 50 herzustellen ist ein Gewindestift 102 angeordnet, der mit einer in der Druckplatte 64 ausgebildeten Durchgangsbohrung 104 und mit einer in dem Wellenendbereich 60 ausgebildeten Gewindebohrung 106 in Eingriff bringbar ist. Der Gewindestift 102 wird dabei durch die Durchgangsbohrung 104 geführt und in die Gewindebohrung 106 geschraubt. Dadurch wird vermieden, dass sich der mit der Druckplatte 64 und der Antriebswelle 50 in Eingriff befindliche Verbindungsbolzen 72 durch Verdrehen der Druckplatte 64 gegenüber der Antriebswelle 50 mit verdreht.

Ferner ist eine Verbindungsplatte 108 und ein Sicherungsstift 110 vorgesehen, beispielsweise ein Federstecker, wobei die Verbindungsplatte 108 ein Rundloch 112 und ein Sechskantloch 114 aufweist und dadurch den sechskantförmigen Werkzeugansatz 84 des Verbindungsbolzens 72 mit dem runden Gewindestift 102 verbindet, so dass ein Verdrehen des Verbindungsbolzens 72 gegenüber dem Gewindestift 102 blockiert ist. Der Sicherungsstift 110 erstreckt sich quer zum Gewindestift 102 durch eine Querbohrung 116 am Gewindestift 102 und fixiert bzw. sichert die Verbindungsplatte 108 am Gewindestift 102.

Eine Antriebsverbindung 46 für eine Häckseleinrichtung 36 gemäß obiger Ausführungen eignet sich besonders zum Einsatz in einer Erntemaschine 10, beispielsweise einem Feldhäcksler oder einem Zuckerrohrernter, wobei letzterer üblicherweise mit einer Häckseleinrichtung 36 mit zwei Häckseltrommeln 32, 34 ausgerüstet ist und eine der Trommeln 32, 34 zum Einstellen der Häckselrate und des Häckselmaßes gegenüber der anderen Trommel 32, 34 von der Antriebsverbindung 46 bzw.vom Antriebsstrang gelöst und entsprechend justiert werden kann. Feldhäcksler sind üblicherweise mit einer Häckseleinrichtung 36 mit nur einer rotierenden Häckseltrommel 32, 34 versehen, die jedoch ebenfalls eine Antriebsverbindung 46 gemäß obiger Ausführung aufweisen kann. Auch andere Erntemaschinen, bei denen eine Häckseleinrichtung 36 vorgesehen ist können mit einer solchen Antriebsverbindung 46 ausgestattet sein und sind hiermit berücksichtigt.

## Patentansprüche

1. Antriebsverbindung (46) für eine Häckseltrommel (32, 34) mit einem Antriebsrad (48), einer Antriebswelle (50) und einer Kupplungsanordnung (52), wobei die Kupplungsanordnung (52) ein Kupplungsscheibenpaket (54) mit antriebsradseitigen Kupplungsscheiben (56) und antriebswellenseitigen Kupplungsscheiben (58) umfasst, das von einer auf einem Wellenendbereich (60) der Antriebswelle (50) angeordneten und auf das Kupplungsscheibenpaket (54) wirkenden Druckplatte (64) und einem konzentrisch zur Antriebswelle (50) angeordneten Verbindungsbolzen (72) mit einer Axialkraft beaufschlagbar und in Reibschluss bringbar ist, wobei der Verbindungsbolzen (72) ein erstes Außengewinde (74) aufweist, welches mit einer in der Druckplatte (64) ausgebildeten ersten Gewindebohrung (78) in Eingriff bringbar ist, **dadurch gekennzeichnet, dass** der Verbindungsbolzen (72) ein zweites Außengewinde (76) aufweist, welches mit einer im Wellenendbereich (60) ausgebildeten zweiten Gewindebohrung (80) in Eingriff bringbar ist, wobei das erste und zweite Außengewinde (74, 76) sowie die erste und zweite Gewindebohrung (78, 80) zueinander entgegengesetzt ausgebildete Gewinderichtungen aufweisen.

2. Antriebsverbindung (48) nach Anspruch 1, **dadurch gekennzeichnet, dass** der Verbindungsbolzen (72) im Bereich des ersten Außengewindes (74) einen maximalen Durchmesser aufweist.

3. Antriebsverbindung (48) nach Anspruch 1 oder 2, **dadurch gekennzeichnet, dass** die Druckplatte (64) den Wellenendbereich (60) abdeckt und eine der Kupplungsanordnung (52) zugewandte Kreisringfläche (68) aufweist.

4. Antriebsverbindung (48) nach Anspruch 3, **dadurch gekennzeichnet, dass** die Kupplungsanordnung (52) ein auf dem Wellenendbereich (60) zwischen Druckplatte (64) und Kupplungsscheibenpaket (54) axial verschiebbar gelagerten Kupplungsring (62) umfasst, der eine zum Wellenendbereich ausgerichtete Kreisringfläche (66) aufweist, die mit der der Kupplungsanordnung (52) zugewandten Kreisringfläche (68) der Druckplatte (64) in Eingriff bringbar ist.

5. Antriebsverbindung (48) nach einem der Ansprüche 1 bis 4, **dadurch gekennzeichnet, dass** das erste Außengewinde (74) und die erste Gewindebohrung (78) zum zweiten Außengewinde (76) bzw. zur zweiten Gewindebohrung (80) verschiedene Gewindesteigungen und zum zweiten Außengewinde (76) bzw. zur zweiten Gewindebohrung (80) verschiedene Gewindedurchmesser aufweisen.

6. Antriebsverbindung (48) nach einem der Ansprüche 1 bis 5, **dadurch gekennzeichnet, dass** das erste Außengewinde (74) und die erste Gewindebohrung (78) eine zum zweiten Außengewinde (76) bzw. zur zweiten Gewindebohrung (80) größere Gewindesteigung aufweisen.

7. Antriebsverbindung (48) nach einem der Ansprüche 1 bis 6, **dadurch gekennzeichnet, dass** das erste Außengewinde (74) und die erste Gewindebohrung (78) zum zweiten Außengewinde (76) bzw. zur zweiten Gewindebohrung (80) größere Gewindedurchmesser aufweisen.

8. Antriebsverbindung (48) nach einem der Ansprüche 1 bis 7, **dadurch gekennzeichnet, dass** eine auf einem Wellenabsatz (90) der Antriebswelle (50) gelagerte Abstandshülse (92) vorgesehen ist, an der das Kupplungsscheibenpaket (54) und das Antriebsrad (48) axial abstützbar sind, wobei das Kupplungsscheibenpaket (54) zwischen der Abstandshülse (92) und der Druckplatte (64) angeordnet ist.

9. Antriebsverbindung (48) nach einem der Ansprüche 1 bis 8, **dadurch gekennzeichnet, dass** ein Gewindestift 102) angeordnet ist, der mit einer in der Druckplatte (64) ausgebildeten Durchgangsbohrung (104) und mit einer in dem Wellenendbereich (60) ausgebildeten Gewindebohrung (106) in Eingriff bringbar ist, um eine Verdrehsicherung der Druckplatte (64) gegenüber der Antriebswelle (50) bereitzustellen.

10. Antriebsverbindung (48) nach Anspruch 9, **dadurch gekennzeichnet, dass** eine Verbindungsplatte (108) und ein Sicherungsstift (110) vorgesehen ist, wobei die Verbindungsplatte (108) einen Werkzeugansatz (84) des Verbindungsbolzens (72) mit dem Gewindestift (102) verbindet, so dass ein Verdrehen des Verbindungsbolzens (72) gegenüber dem Gewindestift (102) blockiert ist und wobei sich der Sicherungsstift (110) quer zum Gewindestift (102) durch diesen erstreckt und die Verbindungsplatte (108) axial zum Gewindestift (102) bzw. zur Druckplatte (64) sichert.

11. Erntemaschine (10) mit einer Häckseleinrichtung (36) mit wenigstens einer angetriebenen Häckseltrommel (32, 34), **gekennzeichnet durch** eine Antriebsverbindung (48) nach einem der Patentansprüche 1 bis 10.

## Claims

1. Drive connection (46) for a chopping drum (32, 34) comprising a drive wheel (48), a drive shaft (50) and a clutch arrangement (52), wherein the clutch arrangement (52) comprises a clutch disk unit (54) which has clutch disks (56) on the drive wheel side and clutch disks (58) on the drive shaft side and which is able to be acted upon by an axial force and which is able to be brought into a frictional connection by a pressure plate (64) arranged on a shaft end region (60) of the drive shaft (50) and acting on the clutch disk unit (54), and a connecting bolt (72) arranged concentrically to the drive shaft (50), wherein the connecting bolt (72) comprises a first external thread (74) which is able to be brought into engagement with a first threaded bore (78) configured in the pressure plate (64), **characterized in that** the connecting bolt (72) comprises a second external thread (76) which is able to be brought into engagement with a second threaded bore (80) configured in the shaft end region (60), wherein the first and second external threads (74, 76) and the first and second threaded bores (78, 80) have thread directions which are configured so as to oppose one another.

2. Drive connection (48) according to Claim 1, **characterized in that** the connecting bolt (72) has a maximum diameter in the region of the first external thread (74).

3. Drive connection (48) according to Claim 1 or 2, **characterized in that** the pressure plate (64) covers the shaft end region (60) and has a circular surface (68) facing the clutch arrangement (52).

4. Drive connection (48) according to Claim 3, **characterized in that** the clutch arrangement (52) comprises a clutch ring (62) which is mounted in an axially displaceable manner on the shaft end region (60) between the pressure plate (64) and the clutch disk unit (54) and which has a circular surface (66) which is oriented toward the shaft end region and which is able to be brought into engagement with the circular surface (68) of the pressure plate (64) facing the clutch arrangement (52) .

5. Drive connection (48) according to one of Claims 1 to 4, **characterized in that** the first external thread (74) and the first threaded bore (78) have thread pitches which are different from the second external thread (76) and/or to the second threaded bore (80) and thread diameters which are different from the second external thread (76) and/or the second threaded bore (80).

6. Drive connection (48) according to one of Claims 1 to 5, **characterized in that** the first external thread (74) and the first threaded bore (78) have a larger thread pitch relative to the second external thread (76) and/or the second threaded bore (80).

7. Drive connection (48) according to one of Claims 1 to 6, **characterized in that** the first external thread (74) and the first threaded bore (78) have larger thread diameters relative to the second external thread (76) and the second threaded bore (80) .

8. Drive connection (48) according to one of Claims 1 to 7, **characterized in that** a spacer sleeve (92) mounted on a shaft projection (90) of the drive shaft (50) is provided, the clutch disk unit (54) and the drive wheel (48) being able to be axially supported thereon, wherein the clutch disk unit (54) is arranged between the spacer sleeve (92) and the pressure plate (64).

9. Drive connection (48) according to one of Claims 1 to 8, **characterized in that** a threaded pin (102) is arranged, said threaded pin being able to be brought into engagement with a through-bore (104) configured in the pressure plate (64) and with a threaded bore (106) configured in the shaft end region (60), in order to prevent the pressure plate (64) from rotating relative to the drive shaft (50).

10. Drive connection (48) according to Claim 9, **characterized in that** a connecting plate (108) and a securing pin (110) are provided, wherein the connecting plate (108) connects a tool attachment (84) of the connecting bolt (72) to the threaded pin (102), so that a rotation of the connecting bolt (72) relative to the threaded pin (102) is blocked and wherein the securing pin (110) extends transversely to the threaded pin (102), through said threaded pin, and axially secures the connecting plate (108) axially relative to the threaded pin (102) and/or the pressure plate (64).

11. Harvesting machine (10) comprising a chopping device (36) having at least one driven chopping drum (32, 34) **characterized by** a drive connection (48) according to one of Claims 1 to 10.

## Revendications

1. Liaison d'entraînement (46) pour un tambour de hachage (32, 34) avec une roue d'entraînement (48), un arbre d'entraînement (50) et un dispositif d'embrayage (52), dans laquelle le dispositif d'embrayage (52) comprend un paquet de disques d'embrayage (54) avec des disques d'embrayage côté roue d'entraînement (56) et des disques d'embrayage côté arbre d'entraînement (58), qui peut être soumis à une force axiale et amené en liaison de friction par un plateau de pression (64) disposé sur une région d'extrémité d'arbre (60) de l'arbre d'entraînement (50) et agissant sur le paquet de disques d'embrayage (54) et par un boulon de liaison (72) disposé de façon concentrique à l'arbre d'entraînement (50), dans laquelle le boulon de liaison (72) présente un premier filet extérieur (74), qui peut être mis en prise avec un premier alésage fileté (78) formé dans le plateau de pression (64), **caractérisée en ce que** le boulon de liaison (72) présente un second filet extérieur (76), qui peut être mis en prise avec un second alésage fileté (80) formé dans la région d'extrémité d'arbre (60), dans laquelle les premier et second filets extérieurs (74, 76) ainsi que les premier et second alésages filetés (78, 80) présentent des sens de filet réalisés en opposition l'un à l'autre.

2. Liaison d'entraînement (48) selon la revendication 1, **caractérisée en ce que** le boulon de liaison (72) présente un diamètre maximal dans la région du premier filet extérieur (74).

3. Liaison d'entraînement (48) selon la revendication 1 ou 2, **caractérisée en ce que** le plateau de pression (64) recouvre la région d'extrémité d'arbre (60) et présente une face annulaire circulaire (68) tournée vers le dispositif d'embrayage (52).

4. Liaison d'entraînement (48) selon la revendication 3, **caractérisée en ce que** le dispositif d'embrayage (52) comprend une bague d'embrayage (62) montée sur la région d'extrémité d'arbre (60) de façon axialement déplaçable entre le plateau de pression (64) et le paquet de disques d'embrayage (54), qui présente une face annulaire circulaire (66) orientée vers la région d'extrémité d'arbre, qui peut être amenée en engagement avec la face annulaire circulaire (68) du plateau de pression (64) tournée vers le dispositif d'embrayage (52).

5. Liaison d'entraînement (48) selon l'une quelconque des revendications 1 à 4, **caractérisée en ce que** le premier filet extérieur (74) et le premier alésage fileté (78) présentent par rapport au second filet extérieur (76) ou au second alésage fileté (80) des pas de filet différents et par rapport au second filet extérieur (76) ou au second alésage fileté (80) des diamètres de filet différents.

6. Liaison d'entraînement (48) selon l'une quelconque des revendications 1 à 5, **caractérisée en ce que** le premier filet extérieur (74) et le premier alésage fileté (78) présentent un pas de filet plus grand par rapport au second filet extérieur (76) ou par rapport au second alésage fileté (80).

7. Liaison d'entraînement (48) selon l'une quelconque des revendications 1 à 6, **caractérisée en ce que** le premier filet extérieur (74) et le premier alésage fileté (78) présentent des diamètres de filet plus grands par rapport au second filet extérieur (76) ou par rapport au second alésage fileté (80).

8. Liaison d'entraînement (48) selon l'une quelconque des revendications 1 à 7, **caractérisée en ce qu'**il est prévu une douille d'écartement (92) montée sur un épaulement d'arbre (90) de l'arbre d'entraînement (50), sur laquelle le paquet de disques d'embrayage (54) et la roue d'entraînement (48) peuvent s'appuyer axialement, dans laquelle le paquet de disques d'embrayage (54) est disposé entre la douille d'écartement (92) et le plateau de pression (64).

9. Liaison d'entraînement (48) selon l'une quelconque des revendications 1 à 8, **caractérisée en ce qu'**elle comporte une goupille filetée (102), qui peut être mise en prise avec un alésage passant (104) formé dans le plateau de pression (64) et avec un alésage fileté (106) formé dans la région d'extrémité d'arbre (60), afin de procurer un blocage en rotation du plateau de pression (64) par rapport à l'arbre d'entraînement (50).

10. Liaison d'entraînement (48) selon la revendication 9, **caractérisée en ce qu'**il est prévu une plaque de liaison (108) et une goupille de blocage (110), dans laquelle la plaque de liaison (108) relie un siège d'outil (84) du boulon de liaison (72) à la goupille filetée (102), de telle manière qu'une rotation du boulon de liaison (72) par rapport à la goupille filetée (102) soit bloquée et dans laquelle la goupille de blocage (110) s'étend transversalement à la goupille filetée (102) à travers celle-ci et bloque la plaque de liaison (108) axialement par rapport à la goupille filetée (102) ou au plateau de pression (64).

11. Moissonneuse (10) dotée d'un dispositif de hachage (36) comportant au moins un tambour de hachage entraîné (32, 34), **caractérisée par** une liaison d'entraînement (48) selon l'une quelconque des revendications 1 à 10.
